# EUROPEAN PATENT APPLICATION

(11) **EP 4 571 485 A1**
(43) Date of publication of application: **18.06.2025**
(21) Application number: 24215087.8
(22) Date of filing: 25.11.2024
(51) Int. Cl.: G06F 3/16, H04S 7/00

(54) **AMBIENT SOUND GENERATION METHOD AND AMBIENT SOUND GENERATION SYSTEM**

(30) Priority: 11.12.2023 CN 202311696242
(71) Applicant: Harman International Industries, Inc., Stamford, Connecticut 06901 (US)
(72) Inventor: XIANG, Pei, Stamford, CT, 06901 (US); LI, Kai, Stamford, CT, 06901 (US); YANG, Jue, Stamford, CT, 06901 (US)
(74) Representative: Westphal, Mussgnug & Partner, Patentanwälte mbB

(57) **Abstract**

Disclosed are an ambient sound generation method and an ambient sound generation system. The ambient sound generation method comprises: determining target ambient sound information based on ambient sound design reference information; determining ambient sound generation information corresponding to the target ambient sound information based on the target ambient sound information, the ambient sound generation information comprising information of at least one subordinate ambient sound and feature parameter information corresponding to the subordinate ambient sound; and generating a target ambient sound based on the ambient sound generation information; and wherein the target ambient sound is an audio signal having at least two channels, and the target ambient sound is played back in separate channels via a plurality of playback devices disposed at intervals.

## Description

### TECHNICAL FIELD

The present invention relates to the field of audio processing, and more particularly to an ambient sound generation method and an ambient sound generation system.

### BACKGROUND

As ambient sounds or background sounds are widely used in the civil and commercial sectors, ambient sound generation is facing higher requirements.

Currently, in the generation of an ambient sound, on the one hand, the generated ambient sound is usually played back to a user by a single channel or closely mounted stereo speakers, and the sound may be regarded as a point source, which makes, for the user, listening not as immersive as the real environment, and the spatial stereo effect and immersive experience of the ambient sound are poor; on the other hand, the current ambient sound generation usually only includes a single white noise or a single background sound, which cannot flexibly adapt to the user's different needs, such as cannot be coordinated with music that the user is playing back, or cannot be flexibly varied according to the user's current geographical location or weather environment information, which leads to a poor auditory experience for the user.

Therefore, there is a need for a method that, under the premise of achieving good and convenient generation of an ambient sound, enables the generated ambient sound to be flexibly adjusted and varied according to the user's needs and the current physical spatiotemporal environment, and can be coordinated with other music being played back by the user. And, the ambient sound, for example, has multiple channels and is played back by multiple sound sources, thereby improving the user's auditory experience and the spatial stereoscopic impression of the ambient sound.

### SUMMARY OF THE INVENTION

In view of the above problems, the present invention provides an ambient sound generation method and an ambient sound generation system. With the system and method provided in the present invention, it is enabled that on the basis of achieving good generation of an ambient sound, the generated ambient sound be flexibly adjusted and varied according to the user's needs and the current physical spatiotemporal environment, and be coordinated with other music being played back by the user. And, the ambient sound, for example, has multiple channels and is played back by multiple sound sources, thereby improving the user's auditory experience and the spatial stereoscopic impression of the ambient sound.

According to an aspect of the present disclosure, proposed is an ambient sound generation method, including: determining target ambient sound information based on ambient sound design reference information; determining ambient sound generation information corresponding to the target ambient sound information based on the target ambient sound information, the ambient sound generation information including information of at least one subordinate ambient sound and feature parameter information corresponding to the subordinate ambient sound; and generating a target ambient sound based on the ambient sound generation information.

In some embodiments, the ambient sound design reference information includes: at least one of desired ambient sound information input by the user, current music information, and spatiotemporal physical information.

In some embodiments, with the ambient sound design reference information including the desired ambient sound information input by the user, determining the target ambient sound information includes: determining the target ambient sound information based on content analysis of the desired ambient sound information.

In some embodiments, with the ambient sound design reference information including the current music information, determining the target ambient sound information includes: determining the music characteristic information of the current music information, and determining the target ambient sound information based on the music characteristic information.

In some embodiments, the music characteristic information includes: at least one of lyrics content information, music type information, music rhythm information, and music style information.

In some embodiments, the spatiotemporal physical information includes: at least one of current position information, current time information, and current weather information.

In some embodiments, the feature parameter information corresponding to the subordinate ambient sound includes: at least one of volume information, trigger density information, orientation information, motion speed information, and position information.

In some embodiments, generating the target ambient sound based on the ambient sound generation information includes: acquiring a respective ambient sound material from a preset ambient sound material library based on information of each subordinate ambient sound; and subjecting the ambient sound material to rendering, synthesis and mixing processing based on the feature parameter information of the each subordinate ambient sound.

In some embodiments, the target ambient sound is an audio signal having at least two channels, and the target ambient sound is played back in separate channels via a plurality of playback devices.

In some embodiments, the target ambient sound is an audio signal having three or more channels, and a number of the playback devices corresponds to a number of the channels of the target ambient sound.

According to another aspect of the present disclosure, proposed is an ambient sound generation system, including: a controller, configured to execute the ambient sound generation method as described above; a playback device, configured to receive a target ambient sound from the controller and play back the target ambient sound.

In some embodiments, the target ambient sound is an audio signal having at least two channels, and wherein, the playback device is a plurality of playback devices and is configured to play back the target ambient sound in separate channels.

### DESCRIPTION OF THE DRAWINGS

In order to more clearly illustrate the technical solutions of the embodiments of the present invention, the accompanying drawings to be used in the description of the embodiments will be briefly introduced below, and it will be obvious that the accompanying drawings in the following description are only some of the embodiments of the present invention, and that for those of ordinary skill in the art, other accompanying drawings can be obtained based on these drawings without making creative labor. The following accompanying drawings are not intentionally drawn in equal proportions to the actual dimensions, with the emphasis on illustrating the main idea of the present invention.
FIG. 1 illustrates an exemplary flowchart of an ambient sound generation method 100 according to an embodiment of the present disclosure;
FIG. 2 illustrates an exemplary flowchart of a process S 103 of generating a target ambient sound according to an embodiment of the present disclosure;
and FIG. 3 illustrates a schematic diagram of an ambient sound generation system 200 according to an embodiment of the present disclosure.

### DETAILED DESCRIPTION

The technical solutions in embodiments of the present invention will be clearly and completely described below in conjunction with the accompanying drawings, and it will be apparent that the embodiments described are only some embodiments of the present invention and not all of them. Based on the embodiments of the present invention, all other embodiments obtained by those of ordinary skill in the art without making creative labor fall within the scope of protection of the present invention.

As illustrated in the present application and the claims, unless clearly indicated in the context as an exception, the words "one," "a," "a kind of," and/or "the " and the like do not refer specifically to the singular, but may also include the plural. In general, the terms "including" and "comprising" indicate only the inclusion of clearly identified steps and elements, which do not constitute an exclusive list, and the method or the device may also contain other steps or elements.

Although the present application makes various references to certain modules in the system according to the embodiments of the present application, any number of different modules may be used and run on the user terminal and/or server. The modules described are merely illustrative, and different aspects of the systems and methods may use different modules.

Flowcharts are used in the present application to illustrate operations performed by a system according to an embodiment of the present application. It should be understood that the preceding or following operations are not necessarily performed in a precise sequence. Instead, various steps may be processed in a reverse order or simultaneously, as required. Meanwhile, it is also possible to add other operations to these processes or to remove a step or steps from these processes.

According to an aspect of the present disclosure, proposed is an ambient sound generation method 100.

It should be understood that the "ambient sound" described in the present application, that is, a background sound, is intended to express a sound possessed in a specific scene or environment. Depending on the scene and environment, the ambient sound may, for example, include natural sounds such as sound of the wind, sound of the rain, and sound of ocean waves, animal sounds such as sound of birds and sound of frogs, sounds from objects such as sound of horns and sound of humming fans, as well as sounds from people in the environment such as noise from crowds and cheers.

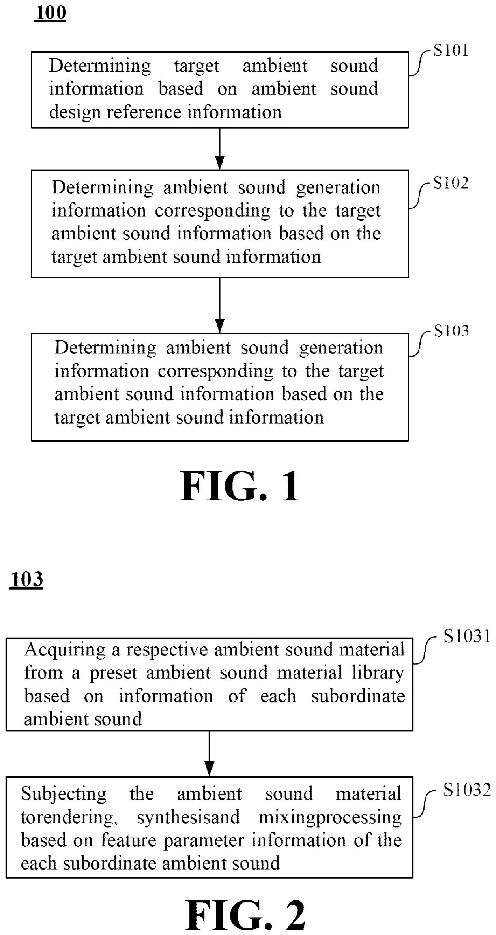

FIG. 1 illustrates an exemplary flowchart of an ambient sound generation method 100 according to an embodiment of the present disclosure. Referring to FIG. 1, the ambient sound generation method 100 includes: first, in step S 101, target ambient sound information is determined based on ambient sound design reference information.

The ambient sound design reference information refers to reference information for determining a target ambient sound, which may be, for example, a single piece of information or a plurality of pieces of information. It should be understood that embodiments of the present disclosure are not limited by the specific number of pieces of the ambient sound design reference information.

The ambient sound design reference information may include, for example, one of desired ambient sound information input by a user, current music information, and spatiotemporal physical information, or may also include all the desired ambient sound information input by the user, the current music information, and the spatiotemporal physical information. Embodiments of the present disclosure are not limited by the type and source of this ambient sound design reference information.

The target ambient sound information refers to information for representing ambient content of the ambient sound to be generated, which may be, for example, character string information, such as "a quiet river with cricket sound" or "a street-side cafe in a city", etc, or may be other types of information. It should be understood that the embodiments of the present disclosure are not limited by the type and way of composition of the target ambient sound information.

For example, it is possible to input the ambient sound design reference information to a preset function or algorithm, and determine the target ambient sound information based on solving of the function or algorithm, or it is also possible to process the ambient sound design reference information via a neural network to generate respective target ambient sound information.

After the target ambient sound information is obtained, further in step S 102, ambient sound generation information corresponding to the target ambient sound information is determined based on the target ambient sound information.

The ambient sound generation information refers to information representing relevant content required for generating the target ambient sound.

For example, the ambient sound generation information may include information of at least one subordinate ambient sound and feature parameter information corresponding to the subordinate ambient sound.

The information of the subordinate ambient sound refers to information for forming a subordinate constituent part of the target ambient sound, which may be, for example, a name or content of the subordinate ambient sound, e.g. "sound of cicadas", "thunder" and the like. Alternatively, it may be a preset digital code or binary code corresponding to the subordinate ambient sound. Embodiments of the present disclosure are not limited by the specific composition and type of this subordinate ambient sound.

The feature parameter information corresponding to the subordinate ambient sound refers to information representing specific performance features that the subordinate ambient sound needs to present in the target ambient sound. For example, the feature parameter information corresponding to the subordinate ambient sound includes: one or more of volume information, trigger density information, orientation information, motion speed information, and position information. It should be understood that embodiments of the present disclosure are not limited by the specific composition of feature parameters of this subordinate ambient sound.

The process of determining the ambient sound generation information corresponding to the target ambient sound information based on the target ambient sound information may, for example, be: inputting the target ambient sound information in a pretrained neural network, processing and analyzing the target ambient sound information based on the neural network, and obtaining the corresponding subordinate ambient sound information and feature parameters of the subordinate ambient sound at an output end of the neural network; or acquiring the ambient sound generation information corresponding to the target ambient sound information based on a preset comparison rule or mapping rule.

It should be understood that only an exemplary process of generating the ambient sound generation information corresponding to the target ambient sound information is given above, and the embodiments of the present disclosure are not limited thereto.

After the ambient sound generation information is obtained, in step S103, ambient sound generation information corresponding to the target ambient sound information is determined based on the target ambient sound information.

The target ambient sound refers to audio information corresponding to the target ambient sound information. For example, generating the target ambient sound based on the ambient sound generation information may be: acquiring respective ambient sound material from a preset ambient sound material library based on information of each subordinate ambient sound; and thereafter, subjecting the ambient sound material to processing, e.g. rendering, synthesis and mixing processing (this application is not limited by the specific ways of rendering, synthesis and mixing performed), based on the feature parameter information of the each subordinate ambient sound to obtain the target ambient sound.

Based on the above, in the present application, in generating the target ambient sound, the target ambient sound information is determined based on the ambient sound design reference information, the ambient sound generation information corresponding to the target ambient sound information that includes information of at least one subordinate ambient sound and feature parameter information corresponding to the subordinate ambient sound is determined based on the target ambient sound information, and thereafter, the target ambient sound is generated based on the ambient sound generation information, such that the generation process of the target ambient sound can be simply and conveniently implemented via the method of the present application, and that the generated target ambient sound has high flexibility and reliability.

In some embodiments, the ambient sound design reference information includes: at least one of desired ambient sound information input by the user, current music information, and spatiotemporal physical information.

The desired ambient sound information input by the user refers to content information of an ambient sound that the user gives and desires to hear, which may be, for example, direct ambient sound content information, e.g. "thunder" and "sound of rain", or may also be scene information represented by the ambient sound desired to hear, such as "a train station" and "by a pond", and may also be information including volume level or distance of the ambient sound, e.g. "gentle sound of cicadas", "center of the storm", etc. According to actual conditions, the desired ambient sound may also include other content information. Embodiments of the present disclosure are not limited by the specific composition content and type of this desired ambient sound.

The desired ambient sound information input by the user may be, for example, directly input by the user from a keyboard, or may be clicked by the user from preset ambient sound types and keyword tags provided by the system, and may also be desired ambient sound information obtained by the system after preliminary processing (such as preprocessing or analysis) of the content directly input by the user. It should be understood that the embodiments of the present disclosure are not limited by the input way of this desired ambient sound information.

The current music information refers to information for representing music played back by the user at the current moment, which may be, for example, an audio signal of the music, or may also be feature information of the music etc. Embodiments of the present disclosure are not limited by the specific composition of this music information.

The current music information may be, for example, ambient music information acquired via an external sensor (e.g. an audio signal gathered and currently being played around the user), or may also be music input detected in an internal interface or functional module of the system. It should be understood that embodiments of the present disclosure are not limited by the specific ways of acquisition of this current music information.

The spatiotemporal physical information refers to information associated with spatiotemporal position and physical environment where the user is currently located, which may be, for example, one or more of the user's current position information, current time information, and current weather information. It should be understood that only some examples of the spatiotemporal physical information are given above, and the embodiments of the present disclosure are not limited to their specific composition.

In the present application, with the provision that the ambient sound design reference information includes at least one of the desired ambient sound information input by the user, the currently played music stream information, and the spatiotemporal physical information, it is enabled in determining the target ambient sound information that one or more aspects be comprehensively considered such as the user's needs, the current physical spatiotemporal environment, and other music being played by the user, such that the generated target ambient sound can better adapt to the user's needs and/or to the external physical environment state which the user is currently in; and it is enabled that on the premise that the user has been playing back the music, the generated target ambient sound be well coordinated with this current music, thereby improving flexibility and reliability of the ambient sound generation process, and after mixing into the ambient sound, the user obtains a better auditory experience as compared to the single music playback form before the addition of the ambient sound.

In some embodiments, with the ambient sound design reference information including the desired ambient sound information input by the user, determining the target ambient sound information includes: determining the target ambient sound information based on content analysis of the desired ambient sound information.

The content analysis refers to a process of analytically processing content of the desired ambient sound information according to preset rules, which, depending on actual needs, may be a complex semantic analysis process or a relatively direct keyword splicing and conversion process. It should be understood that the embodiments of the present disclosure are not limited thereto.

For example, it is possible to process and analyze the desired ambient information according to a preset neural network or algorithm, and output the target ambient sound information at an output end of the neural network or algorithm.

For example, when the user inputs "walking on the streets of London on a snowy Christmas day", it is possible to first divide the desired ambient sound information into sentences via a content analysis algorithm or function, extract the keywords "Christmas", "London", "snow" (intensity "strong"), and "street", and further integrate and sort them based on a preset neural network to ultimately obtain the target ambient sound information "Heavy snow on the streets of London on Christmas Day".

For example, when the user has selected "pond", "summer", "night", and "rain" from ambient sound keywords pre-given by the system via a mouse, and further set the intensity of the "rain" keyword to "weak", this information content may, for example, be sorted and merged via solving of a preset algorithm, and the target ambient sound information may, for example, be obtained: "light rain in the pond on a summer night".

However, it should be understood that only some examples of determining the target ambient sound information based on the desired ambient sound information are given above, and the embodiments of the present disclosure are not limited thereto.

Based on the above, in the present application, with the provision that with the ambient sound design reference information including the desired ambient sound information input by the user, determining the target ambient sound information includes: determining the target ambient sound information based on content analysis of the desired ambient sound information, it is enabled that the target ambient sound information be determined based on the desired ambient sound information input by the user in a simple and convenient manner, and that accuracy and precision of the determined target ambient sound information are improved, thereby helping allow the subsequently generated target ambient sound to well adapt to the user's desires and improving the user's auditory experience.

In some embodiments, with the ambient sound design reference information including the current music information, determining the target ambient sound information includes: determining the music characteristic information of the current music information, and determining the target ambient sound information based on the music characteristic information.

The music characteristic information of the current music information refers to information for representing characteristics that the current music information possesses, which may include, for example, lyrics content information, music type information, music rhythm information, music style information, etc. of this current music information. However, it should be understood that embodiments of the present disclosure are not limited thereto.

It should be understood that, for example, the music characteristic information corresponding to the current music information may be directly acquired via the current music information. For example, when the current music information is a title of a song, lyrics, type (such as pop music), rhythm, style (such as "soothing") and other information corresponding to the song may, for example, be directly acquired in a song library. Alternatively, the music characteristic information that the current music information possesses may also be determined by performing feature extraction and analytic processing on the current music information. For example, when the current music information is an audio signal, the music characteristic information corresponding to the audio signal may, for example, be determined by performing time-frequency domain analysis on the audio signal.

It should be understood that only some examples of determining the music characteristic information of the current music information are given above, and the embodiments of the present disclosure are not limited thereto.

And, the process of determining the target ambient sound information based on the music characteristic information may, for example, process the music characteristic information via a preset algorithm or function, determine ambient sound keywords associated with the music characteristic information, and generate the target ambient sound based on the ambient sound keywords. For example, if the music characteristic information of the current music information is music style information, and if the music style information is "country music", then an ambient sound keyword corresponding thereto may, for example, be determined as "country", and target ambient sound information may be subsequently generated based on the ambient sound keyword. Alternatively, the ambient sound information corresponding to the music characteristic information may also be acquired based on a preset rule or mapping relationship, and used as the target ambient sound information.

Based on the above, in the present application, with the provision that with the ambient sound design reference information including the current music information, determining the target ambient sound information includes: determining the music characteristic information of the current music information, and determining the target ambient sound information based on the music characteristic information, it is enabled that the target ambient sound information be generated according to the current music information in a simple and convenient manner, such that with the user having been paying music, the generated target ambient sound can be coordinated with and adapted to the music being played, so as to provide the user with a better auditory experience.

In some embodiments, the music characteristic information includes: at least one of lyrics content information, music type information, music rhythm information, and music style information.

The lyrics content information refers to lyrics content that the currently played music possesses. The lyrics content may be, for example, lyrics within a preset period of time after the current moment, or may also be all the lyrics of the music. It should be understood that embodiments of the present disclosure are not limited by the specific composition of this lyrics content information.

The music type information refers to information representing a type that the currently played music possesses, which may be, for example, classical music, pop music, rock music, jazz music, country music, electronic music, folk music, etc. It should be understood that embodiments of the present disclosure are not limited by the specific composition of this music type information.

The music rhythm information refers to information representing a rhythmic state that the music possesses, which may be, for example, rhythmic pattern of the music, e.g. triplets, syncopated rhythmic pattern, pre-dotted rhythmic pattern, post-dotted rhythmic pattern, etc., or may also be a roughly divided rhythmic state, e.g. fast rhythm, slow rhythm, etc. Embodiments of the present disclosure are not limited by the specific composition of this music rhythm information.

The music style information may, for example, represent characteristics and differences of the music in terms of expression form, melody, rhythm, harmony, etc., such as indicating a sub-style type to which the music belongs under a certain type. Specifically, if the music belongs to classical music type, its style may be, for example, symphony, chamber music, concerto, opera, etc. It should be understood that embodiments of the present disclosure are not limited thereto.

According to actual needs, the music characteristic information, for example, may also include other contents, e.g. musical instrument characteristic information (representing musical instrument characteristics contained therein), music emotion characteristic information, etc.

Based on the above, in the present application, with the provision that the music characteristic information includes: at least one of lyrics content information, music type information, music rhythm information, and music style information, it is enabled in determining the target ambient sound information based on the music characteristic information of the music that characteristics of the music at multiple levels and dimensions be comprehensively considered, such that the determined target ambient sound information can better adapt to the currently played music.

In some embodiments, the spatiotemporal physical information includes: at least one of current position information, current time information, and current weather information.

The current position information, for example, represents a geographical location in which the user currently is, such as the user's street, building, city, province, country and other information.

The current time information, for example, represents current time-related information, e.g. calendar information, clock time information, etc.

The current weather information, for example, represents a weather condition that a region where the user is located currently has.

For example, when the ambient sound design reference information includes spatiotemporal physical information, the process of determining the target ambient sound information based on the ambient sound design reference information may, for example, include: based on the user's current position information, current time information, and current weather information, determining ambient sound keywords corresponding thereto according to preset rules, respectively, and generating the target ambient sound information based on the ambient sound keywords.

For example, if the user is currently in Beijing, the calendar is December, the time is night, the weather information is heavy snow, and a preset rule is, for example, to acquire a state opposite to the current state to provide the user with a different scene experience (it should be understood that the preset rule is only an example and may be modified according to actual needs), then, for example, ambient sound keywords "Hainan", "summer", "daytime", and "sunny" may be determined accordingly, and the target ambient sound information may thereby be determined as "Hainan has sunny summer daytime".

Based on the above, with the provision that the spatiotemporal physical information includes: at least one of current position information, current time information, and current weather information, it is enabled that the spatiotemporal state and physical environment state that the user is in be taken into account in generating the target ambient sound information, such that the target ambient sound that fits the user's current needs can be better generated and the user's auditory experience can be improved.

For example, in some embodiments, in determining the target ambient sound information based on the ambient sound design reference information, the ambient sound design reference information will, for example, include all of two or three of the desired ambient sound information input by the user, the current music information, and the spatiotemporal physical information. Some examples are given below to explain this in more detail.

For example, when the target ambient sound information is determined based on both the desired ambient sound information input by the user and the current music information, for example, the desired ambient sound information input by the user is "night" and the current music information is soft country music, then it is possible, for example, to determine a target ambient sound keyword "night scene" based on "night" according to a preset algorithm, determine a target ambient sound keyword "countryside" based on the music characteristic information of the current music information, and generate target ambient sound information "countryside night scene".

For example, when the target ambient sound information is determined based on both the desired ambient sound information input by the user and the spatiotemporal physical information, for example, the desired ambient sound information input by the user is "coffee house", it is detected that the user's current geographical location is "streetside", and the calendar is "Christmas", then, it is possible, for example, to determine a target ambient sound keyword "streetside" based on the geographical location "streetside" according to a preset algorithm, determine a target ambient keyword "festival" based on the calendar "Christmas", and generate target ambient sound information "streetside cafe house festival".

For example, when the target ambient sound information is determined based on both the current music information and the spatiotemporal physical information, for example, the music type of the current music information is folk songs, and the weather of a city which the user is in is cloudy, it is possible, for example, to determine a keyword "sunny" based on "cloudy" according to a preset algorithm, determine a keyword "mountains" based on "folk songs", and generate target ambient sound information "sunny mountains".

For example, when the target ambient sound information is determined based on both the desired ambient sound information input by the user, the current music information, and the spatiotemporal physical information, for example, the desired ambient sound information input by the user is "bonfire barbecue", the user's position is "seaside", and a song currently being played is of a light music type, it is possible, for example, to determine a target ambient sound keyword "ocean waves" based on the position "seaside", determine a target ambient sound keyword "breeze" based on the "light music" type, and generate target ambient sound information "waves, breeze, and bonfire barbecue".

It should be understood that only some examples are given above, and embodiments of the present disclosure are not limited thereto.

In some embodiments, the feature parameter information corresponding to the subordinate ambient sound includes: at least one of volume information, trigger density information, orientation information, motion speed information, and position information.

The volume information refers to a volume ratio or volume proportion of the subordinate ambient sound in the target ambient sound.

The trigger density information refers to a frequency of occurrence of the subordinate ambient sound or a set of subordinate ambient sounds in the target ambient sound.

The orientation information refers to an orientation of the subordinate ambient sound relative to the user's desired orientation (for example, the user hopes that the sound of cicadas appears in front of the user, and the sound of frogs appears in the horizontal position of 11 o'clock in front of the user's left, at a pitch angle of negative 15 degrees).

The motion speed information refers to a desired motion mode and motion speed of the subordinate ambient sound. For example, it is hoped to create an environment where "a butterfly flies in front of the user", and then, for example, it is desired that the subordinate ambient sound the sound of the sea waves is in a uniformly decelerated motion from far to near.

The position information refers to a position of the subordinate ambient sound relative to the user. For example, if it is hoped to present an ambient sound of fireworks exploding 500 meters away from the user, then the subordinate ambient sound "fireworks exploding" has, for example, the position information "500 m".

Based on the above, in the present application, with the provision that the characteristic parameter information corresponding to the subordinate ambient sound includes: at least one of volume information, trigger density information, orientation information, motion speed information, and position information, it is enabled that various characteristics that each subordinate ambient sound in the target ambient sound has be flexibly selected and set, thereby allowing for realistic and accurate generation of the target ambient sound and improving the user's auditory experience.

In some embodiments, the process S 103 of determining the target ambient sound based on the ambient sound generation information may, for example, be described more specifically.

FIG. 2 illustrates an exemplary flowchart of a process S 103 of generating a target ambient sound according to an embodiment of the present disclosure. Referring to FIG. 2, firstly, in step S 1031, respective ambient sound material is acquired from a preset ambient sound material library based on information of each subordinate ambient sound.

It should be understood that the preset ambient sound material library refers to a resource library that stores multiple separate ambient sound materials. The separate ambient sound materials may, for example, include natural sounds such as sound of the wind, sound of the rain, and sound of ocean waves, animal sounds such as sound of birds and sound of frogs, sounds from objects such as sound of horns and sound of humming fans, as well as sounds from people in the environment such as noise from crowds and cheers.

For example, it is possible to, according to information based on each subordinate ambient sound, e.g, the name of each subordinate ambient sound, acquire in the preset ambient sound material library a respective ambient sound material, for example, acquire a sound-of-rain ambient sound material corresponding to a subordinate ambient sound name "sound of rain".

Thereafter, in step S1032, the ambient sound material is subjected to rendering, synthesis and mixing processing based on the feature parameter information of the each subordinate ambient sound.

For example, after acquiring the respective ambient sound materials corresponding to the multiple pieces of subordinate ambient sound information, it is possible, for example, to accordingly adjust relevant attributes (e.g. volume, density, etc.) of the ambient sound materials according to the feature parameter information of the subordinate ambient sound, and to, for example, in the process of overall rendering and fusing to form the target ambient sound, set fusion parameters based on the feature parameter information such that the each subordinate ambient sound in the fused target ambient sound may present characteristics corresponding to the feature parameter information (e.g. present respective orientation, motion state, motion speed, position, etc.)

Rendering, synthesis and mixing processing refers to an audio processing manner of generating the target ambient sound based on the subordinate ambient sound. Embodiments of the present disclosure are not limited by the specific composition of this rendering, synthesis and mixing processing and its content.

Based on the above, in the present application, with the provision that generation of the target ambient sound includes first acquiring in the preset ambient sound material library the respective ambient sound material based on the information of the each subordinate ambient sound, and thereafter, subjecting the ambient sound material to rendering, synthesis and mixing processing based on the feature parameter information of the each subordinate ambient sound, it is enabled in the process of generating the target ambient sound that the respective ambient sound material be accurately and reliably selected, and that the ambient sound material to adjusted accordingly based on the feature parameter information according to the actual situation, such that the generated target ambient sound can meet the user's needs well and accurately, and the user's auditory experience can be improved.

In some embodiments, the target ambient sound is an audio signal having at least two channels, and the target ambient sound is played back in separate channels via a plurality of playback devices distributed flexibly in one physical space.

For example, the target ambient sound may, for example, be four-channel or six-channel, and the embodiments of the present disclosure are not limited by the number of channels that the audio signal of the target ambient sound has.

For example, it is possible to directly generate an audio signal of the target ambient sound with multiple channels, or it is also possible to first generate a single audio signal and then perform multi-channel rendering on the single audio signal, such as a Vector Based Amplitude Panning (VBAP) algorithm, to obtain an audio signal with multiple channels. Embodiments of the present disclosure are not limited by the specific way of generating this multi-channel audio signal.

The plurality of playback devices may be, for example, speaker devices, or may also be other devices for implementing audio playback. Embodiments of the present disclosure are not limited by the specific types of the audio playback device.

The spatial positions of the plurality of playback devices may be described more specifically, for example, the plurality of devices may be arranged in a preset device array, such as in a circular array or a rectangular array, or may be arbitrarily and flexibly distributed in one physical space, such as an irregular arrangement. However, it should be understood that embodiments of the present disclosure are not limited thereto.

It should be understood that the plurality of playback devices may, for example, have a preset spacing distance relative to each other, which means that the playback devices are discretely disposed and located in different physical positions, thereby forming a plurality of playback sound sources, rather than just a point sound source of a single-channel speaker or closely mounted stereo speakers.

It should be understood that the embodiments of the present disclosure are not limited by the specific spacing distance between the plurality of playback devices.

In the present application, given that position information of the playback device will also affect the generation result of the final target ambient sound, with the provision that the target ambient sound is an audio signal with at least two channels, and the target ambient sound is played back in separate channels via a plurality of playback devices disposed at intervals, it is enabled that the output ambient sound be having multiple channels and be played back by multiple sound sources as compared to the target ambient sound being output only via a single channel or closely mounted stereo speakers, thereby improving the user's auditory experience and the spatial stereoscopic impression of the ambient sound, and more helping the user gain immersive experience.

In some embodiments, the target ambient sound is an audio signal having three or more channels, and a number of the playback devices corresponds to a number of the channels of the target ambient sound.

With the provision that the target ambient sound is an audio signal having three or more channels, it is enabled that the number of channels of the target ambient sound be further expanded, thereby further enhancing the stereoscopic impression of the target ambient sound; in addition, with the setting that the number of the playback devices corresponds to the number of channels of the target ambient sound, it is enabled that the multi-channel audio be well sent out based on the plurality of playback devices, enhancing the stereoscopic impression and immersiveness of the target ambient sound and further enhancing the user experience.

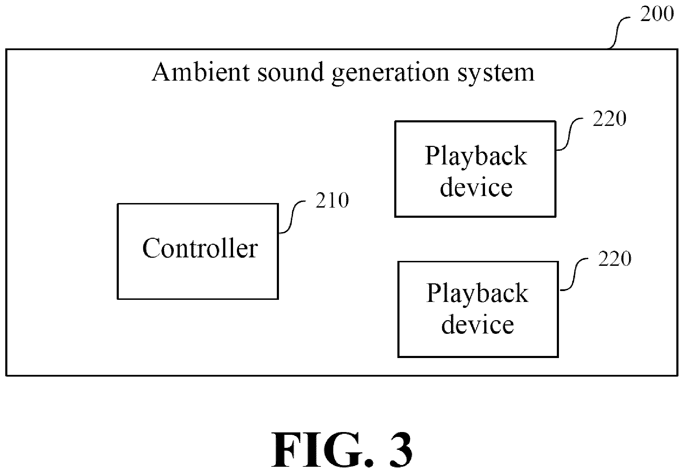

FIG. 3 illustrates a schematic diagram of an ambient sound generation system 200 according to an embodiment of the present disclosure.

Referring to FIG. 3, according to another aspect of the present disclosure, proposed is an ambient sound generation system 200, including: a controller 210 and a playback device 220.

The controller is configured to execute the ambient sound generation method 100 as described above.

The playback device 220 is configured to receive a target ambient sound from the controller and play back the target ambient sound.

The playback device may be, for example, a speaker device, or other device for implementing audio playback. It should be understood that the embodiments of the present disclosure are not limited by the specific type and composition of the playback device.

It should be understood that, depending on actual needs, the controller may, for example, be integrated with one of the playback devices, or the controller may be discretely provided from the playback device. Embodiments of the present disclosure are not limited thereto.

The ambient sound generation system 200 may, for example, implement the method as described before and have functions as described before, which will not be described in detail here.

In some embodiments, the target ambient sound is an audio signal having at least two channels, and wherein, the playback device is a plurality of playback devices distributed flexibly in one physical space and is configured to play back the target ambient sound in separate channels.

For example, the target ambient sound may, for example, be four-channel or six-channel, and the embodiments of the present disclosure are not limited by the number of channels that the audio signal of the target ambient sound has.

The spatial positions of the plurality of playback devices may be described more specifically, for example, the plurality of devices may be arranged in a preset device array, such as in a circular array or a rectangular array, or may be arbitrarily and flexibly distributed in one physical space, such as an irregular arrangement. However, it should be understood that embodiments of the present disclosure are not limited thereto.

It should be understood that the plurality of playback devices may, for example, have a preset spacing distance relative to each other, which means that the playback devices are discretely disposed and located in different physical positions, thereby forming a plurality of playback sound sources, rather than just a point sound source of a single-channel speaker or closely mounted stereo speakers.

It should be understood that the embodiments of the present disclosure are not limited by the specific spacing distance between the plurality of playback devices.

In the present application, given that position information of the playback device will also affect the generation result of the final target ambient sound, with the provision that the target ambient sound is an audio signal with at least two channels, and the target ambient sound is played back in separate channels via a plurality of playback devices distributed flexibly in one physical space, it is enabled that the output ambient sound be having multiple channels and be played back by multiple sound sources as compared to the target ambient sound being output only via a single channel or closely mounted stereo speakers, thereby improving the user's auditory experience and the spatial stereoscopic impression of the ambient sound, and more helping the user gain immersive experience.

The program portion of the technology may be considered a "product" or "artifact" existing in the form of executable code and/or associated data, which is engaged or implemented through a computer-readable medium. A tangible, permanent storage medium may include the memory or storage used in any computer, processor, or similar device or related module. For example, various semiconductor memories, tape drives, disk drives, or any similar devices capable of providing storage functions for software.

All of the software or portions thereof may from time to time communicate over a network, such as the Internet or other communications networks. Such communication may load software from one computer device or processor to another. For example: loading from one server or host computer of the device to a hardware platform of one computer environment, or other computer environment that implements the system, or a system of similar functionality related to providing information required for target tracking. Therefore, another medium capable of transferring software elements may also be used as a physical connection between local devices, such as light wave, radio wave, electromagnetic wave, etc., which are propagated through cables, optical cables or air. The physical medium used to carry waves, such as cables, wireless links, optical cables and the like devices, may also be considered a medium for carrying the software. As used herein, unless restricted to tangible "storage" media, other terms referring to computer or machine "readable media" refer to media that participate in the process of a processor executing any instructions.

The present application uses specific words to describe embodiments of the present application. For example, "first/second embodiment", "an embodiment", and/or "some embodiments" means a feature, structure, or characteristic associated with at least one embodiment of the present application. Accordingly, it should be emphasized and noted that "an embodiment" or " one embodiment" or "an alternative embodiment" referred to two or more times in different places in this specification does not necessarily refer to the same embodiment. In addition, certain features, structures, or characteristics of one or more embodiments of the present application may be combined as appropriate.

In addition, it can be understood by those skilled in the art that aspects of the present application may be illustrated and described by a number of patentable categories or circumstances, including any new and useful process, machine, product, or combination of substances, or any new and useful improvement thereof. Accordingly, aspects of the present application may be performed entirely by hardware, may be performed entirely by software (including firmware, resident software, microcode, or the like), or may be performed by a combination of hardware and software. All of the above hardware or software may be referred to as "data blocks", "modules", "engines", "units", "components" or "systems". Additionally, aspects of the present application may be manifested as a computer product disposed in one or more computer-readable media, the product including computer-readable program code.

Unless otherwise defined, all terms used herein, including technical and scientific terms, have the same meaning as commonly understood by those of ordinary skill in the art to which the present invention belongs. It should also be understood that terms such as those defined in common dictionaries should be construed as having a meaning consistent with their meaning in the context of the relevant technology and should not be construed with idealized or extremely formalized meanings unless expressly defined as such herein.

The foregoing is a description of the present invention and should not be considered a limitation thereof. Although several exemplary embodiments of the present invention are described, it will be readily understood by those skilled in the art that many modifications can be made to the exemplary embodiments without departing from the novel teachings and advantages of the present invention. Accordingly, all such modifications are intended to be encompassed within the scope of the present invention as defined by the claims. It should be understood that the foregoing is a description of the present invention and should not be considered to be limited to the particular embodiments as disclosed, and that modifications to the disclosed embodiments, as well as other embodiments, are intended to be included within the scope of the appended claims. The present invention is limited by the Claims and their equivalents.

## Claims

1. An ambient sound generation method, comprising:
determining target ambient sound information based on ambient sound design reference information;
determining ambient sound generation information corresponding to the target ambient sound information based on the target ambient sound information, the ambient sound generation information comprising information of at least one subordinate ambient sound and feature parameter information corresponding to the subordinate ambient sound;
and generating a target ambient sound based on the ambient sound generation information.

2. The ambient sound generation method according to claim 1, wherein the ambient sound design reference information comprises: at least one of desired ambient sound information input by a user, current music information, and spatiotemporal physical information.

3. The ambient sound generation method according to claim 2, wherein with the ambient sound design reference information comprising the desired ambient sound information input by the user, determining the target ambient sound information comprises:
determining target ambient sound information based on content analysis of the desired ambient sound information.

4. The ambient sound generation method according to claim 2, wherein with the ambient sound design reference information comprising the current music information, determining the target ambient sound information comprises:
determining music characteristic information of the current music information, and determining the target ambient sound information based on the music characteristic information.

5. The ambient sound generation method according to claim 4, wherein the music characteristic information comprises: at least one of lyrics content information, music type information, music rhythm information, and music style information.

6. The ambient sound generation method according to claim 2, wherein the spatiotemporal physical information comprises: at least one of current position information, current time information, and current weather information.

7. The ambient sound generation method according to claim 1, wherein the feature parameter information corresponding to the subordinate ambient sound comprises: at least one of volume information, trigger density information, orientation information, motion speed information, and position information.

8. The ambient sound generation method according to claim 1, wherein generating the target ambient sound based on the ambient sound generation information comprises:
acquiring respective ambient sound material from a preset ambient sound material library based on information of each subordinate ambient sound;
and subjecting the ambient sound material to rendering, synthesis and mixing processing based on the feature parameter information of the each subordinate ambient sound.

9. The ambient sound generation method according to claim 1, wherein the target ambient sound is an audio signal having at least two channels, and the target ambient sound is played back in separate channels via a plurality of playback devices.

10. The ambient sound generation method according to claim 9, wherein the target ambient sound is an audio signal having three or more channels, and a number of the playback devices corresponds to a number of the channels of the target ambient sound.

11. An ambient sound generation system, comprising:
a controller, configured to execute the ambient sound generation method according to any one of claims 1 to 9;
and a playback device, configured to receive a target ambient sound from the controller and play back the target ambient sound.

12. The ambient sound generation system according to claim 11, wherein the target ambient sound is an audio signal having at least two channels,
and wherein the playback device is a plurality of playback devices, and the playback device is configured to play back the target ambient sound in separate channels.
